# EUROPÄISCHE PATENTANMELDUNG

(11) **EP 3 135 680 A1**
(43) Veröffentlichungstag der Anmeldung: **01.03.2017**
(21) Anmeldenummer: 16182500.5
(22) Anmeldetag: 29.01.2015
(51) Int. Cl.: C07F 7/18, C08G 77/18, C08G 77/26, C08G 77/28

(54) **VERFAHREN ZUR HERSTELLUNG VON SILANEN MIT METHYLENGEBUNDENEN KOHLENWASSERSTOFFOXYGRUPPEN**

(30) Priorität: 03.02.2014 DE 102014201883
(62) Teilanmeldung aus: 15701547.0
(71) Anmelder: Wacker Chemie AG, 81737 München (DE)
(72) Erfinder: Stepp, Dr. Michael, 5122 Überackern (AT); Achenbach, Dr. Frank, 84359 Simbach (DE); Peschanel, Birgit, 84489 Burghausen (DE)
(74) Vertreter: Fritz, Helmut

(57) **Zusammenfassung**

**Zusammenfassung**

Gegenstand der Erfindung ist ein Verfahren zur Herstellung der Verbindungen der allgemeinen Formel (5)

**R^{o1}O-CH₂-Si (OAlk)(₃₋ₜ)R^{a}ₜ** (5)

durch Umsetzung des Chlormethylalkylalkoxysilans der allgemeinen Formel (6)

**Cl-CH₂-Si (OA1k) ₍₃₋ₜ₎R^{a}ₜ** (6)

mit einem Metallalkoholat **(R^{o1}O⁻)ᵥM^{v+}** in Gegenwart eines inerten Lösungsmittels, ausgewählt aus Alkanen und Isoalkanen, sowie Aromaten und Alkylaromaten, die auch teilhydriert sein können, sowie deren Gemischen, dessen Siedepunkt mindestens 20°C über dem Siedepunkt der Verbindung der allgemeinen Formel (5) liegt, wobei
**R^{o1}**
einen C₁-C₁₈-Kohlenwasserstoffrest bedeutet,
**R^{a}**
einen C₁-C₁₈-Kohlenwasserstoffrest bedeutet,
**Alk**
für einen linearen oder verzweigten Alkylrest mit 1 - 4 Kohlenstoffatomen steht,
**t**
die Werte 0, 1, 2 oder 3 bedeutet und
**v**
für die Anzahl der Ladungen des Metalls **M** steht.

## Beschreibung

Die Erfindung betrifft ein Verfahren zur Herstellung von Silanen mit methylengebundenen Kohlenwasserstoffoxygruppen.

In elektrischen Anwendungen spielen dielektrische Flüssigkeiten eine große Rolle. Dabei ist eine hohe Temperaturstabilität in Verbindung mit Schwerbrennbarkeit für Anwendungen, bei denen es zu elektrischen Entladungen kommen kann, von Vorteil.

Polydimethylsiloxane (Silicone) weisen eine besonders hohe Temperaturstabilität und Schwerbrennbarkeit (Flammpunkt > 320°C; Selbstentzündungstemperatur ca. 500°C), einen niedrigen Stockpunkt (Pourpoint ca. -45°C) und ausgezeichnete Isolatoreigenschaften (spezifischer Durchgangswiderstand > 10¹⁴ Ω.cm; Durchschlagfestigkeit > 30 kV/2.5 mm) und einen niedrigen dielektrischen Verlustfaktor (tan δ < 10⁻³) auf. Diese Eigenschaften prädestinieren die Silicone für Anwendungen in der Elektronik und Elektrotechnik (z.B. deren Verwendung als Transformatorenöl).

Eine weitere Materialeigenschaft, die für zahlreiche elektrische Anwendungen von großer Bedeutung ist, stellt die Permittivität dar. Diese ist ein Maß für die Durchlässigkeit eines Materials für elektrische Felder. Wird ein dielektrisches Material einem elektrischen Feld ausgesetzt, so wird durch Polarisation des Materials (z.B. durch Orientierung vorhandener Dipole) das angelegte elektrische Feld abgeschwächt. Die durch das dielektrische Material verursachte Abschwächung des Feldes wird als relative Permittivität εᵣ bezeichnet (im Unterschied zur absoluten Permittivität ε₀ des Vakuums). Die für unterschiedliche Stoffe charakteristische relative Permittivität hängt von weiteren Faktoren ab, z.B. der Temperatur und insbesondere von der Frequenz des elektrischen Feldes. Aufgrund von Relaxations- und Absorptionsvorgängen während der Polarisation eines Dielektrikums stellt die relative Permittivität eine im Allgemeinen komplexwertige Funktion dar. Im Folgenden soll unter Permittivität stets der Realteil der komplexen relativen Permittivität verstanden werden.

Im Allgemeinen ist es von Vorteil, wenn sich die in elektronischen und elektrotechnischen Anwendungen eingesetzten Isolationsmaterialien durch niedrige Permittivitäten auszeichnen, da Dielektrika mit hoher Permittivität unerwünschte kapazitive Effekte bedingen. Hierzu zählt z.B. die Blindleistung elektrischer Komponenten, die einen nicht zur Wirkleistung beitragenden Stromfluss darstellt, der letztlich mit elektrischen Verlusten (Erwärmung) verbunden ist. Aus diesem Grund werden als Isolationsmaterialien für Kabel, Transformatoren, elektronische Bauteile vorzugsweise Stoffe mit niedriger Permittivität (εᵣ = 2-3) eingesetzt. Hierzu zählen z.B. die (unpolaren) Kohlenwasserstoffe (Polyethylen, Paraffin etc.) sowie die Silicone.

Materialien mit hoher relativer Permittivität bieten Vorteile bei deren Verwendung als Dielektrikum in elektrischen Kondensatoren. Die Kapazität eines Plattenkondensators, d.h. die bei vorgegebener Spannung gespeicherte Ladungsmenge und damit elektrische Energie, hängt im Wesentlichen von drei Parametern ab, der Elektrodenfläche, dem Abstand der Elektroden und der Permittivität des zwischen den Elektroden befindlichen Dielektrikums. Um eine hohe Kapazität zu erzielen, werden die Elektroden z.B. in Form dünner Metallfolien (getrennt durch µmdünne Dielektrika) aufgerollt oder als Stapel angeordnet. Einer Vergrößerung der Fläche und Verringerung des Abstandes der Elektroden sind jedoch enge Grenzen gesetzt. Auch eine Erhöhung der am Kondensator angelegten Spannung ist nur bedingt möglich, da diese durch die Durchschlagfestigkeit des als Dielektrikum eingesetzten Materials begrenzt wird. Eine weitere Erhöhung der Kapazität kann jedoch durch die Verwendung von Dielektrika mit höherer Permittivität erfolgen. Beispielsweise ließe sich die Kapazität eines Metallpapierkondensators (Wickel aus einseitig metallisiertem und nicht-metallisiertem Papier) durch Imprägnieren mit einem Siloxan hoher Permittivität erhöhen bzw. bei gleicher Kapazität die Bauteilgröße reduzieren.

Die Permittivität herkömmlicher Silicone (Polydimethylsiloxane) ist jedoch niedrig (εᵣ = 2,76). Es bestand daher die Aufgabe, Silicone mit hoher Permittivität zu entwickeln, ohne die oben aufgeführten vorteilhaften Eigenschaften (Durchschlagfestigkeit, Schwerbrennbarkeit etc.) negativ zu verändern.

Eine Erhöhung der Permittivität von Siliconen kann dem Stand der Technik zufolge dadurch erzielt werden, indem man feinteilige Füllstoffe mit hoher Permittivität zumischt (z.B. Titandioxid, Calcium-Kupfer-Titanat, Graphen, Phthalocyanine, Bariumtitanat: εᵣ = 10³ - 10⁴). Allerdings wird auf diese Weise nur bei hohen Füllstoffgehalten eine deutliche Erhöhung der Permittivität erzielt, während gleichzeitig die Durchschlagfestigkeit und die Fließfähigkeit nachteilige Veränderungen erfahren. Beispielsweise wird das Imprägnieren des Papiers eines Papierkondensators durch das Vorhandensein von Füllstoffen im Siliconöl erheblich erschwert. Aufgrund der Größenverteilung der Füllstoffpartikel wird zudem die Wahrscheinlichkeit von Inhomogenitäten und Fehlstellen in den wenige µm dünnen Schichten des Dielektrikums drastisch erhöht. Des Weiteren wurde versucht, durch Herstellen eines Blends mit hoch polarisierbaren Polymeren (Polythiophene, Polypyrrole, Polyether) die Permittivität zu erhöhen. Nachteilig wirkt sich hierbei die Nichtverträglichkeit dieser Polymere mit den Siliconen aus, was sich in einer Phasenseparation äußert.

Polydiorganosiloxane mit polaren funktionellen Gruppen wurden bereits als potenziell geeignete Kandidaten erkannt. Beispielsweise sind in DE 10 2010 046 343 Siloxan-Additive zur Anhebung der relativen Permittivität in (additionsvernetzenden) Siliconmischungen beschrieben. Die kovalente Anbindung polarer bzw. polarisierbarer Gruppen (z.B. Trifluorpropyl, Nitril-, Anilino- Gruppen) an die Siloxankette über Reste mit einem delokalisierten Elektronensystem (z.B. Phenylenrest) ermöglicht zwar die Herstellung homogener Dielektrika mit erhöhter Permittivität, ist aber in der Herstellung sehr aufwendig und führt zu nachteiligen rheologischen Eigenschaften.

JP 49080599 zeigt auf, dass einfach zugängliche Chlormethylmethylsiloxaneinheiten in linearen Siloxanen zu einer deutlichen Anhebung der relativen Permittivität auf bis zu 6,2 (50 Hz) bei gleichzeitig hoher Durchschlagsfestigkeit (41 kV bei 2,5 mm) führen. Es gibt jedoch Anwendungen, in denen Chlorfreiheit gewünscht ist (z.B. zur Vermeidung von HCl-Freisetzung im Brandfall). Es sollten deshalb chlorfreie Polysiloxane mit vergleichbaren Eigenschaften gefunden werden. Vergleicht man das Dipolmoment von Dimethylether (4,3*10⁻³⁰ Cm ¹⁾) mit dem von Chlormethan (6,3*10⁻³⁰ Cm ¹⁾) sollte man bei Annahme analoger Verhältnisse in den jeweiligen Sisubstituierten Vertretern (H₃C-O-CH₃ i.Vgl. zu Si-CH₂-OCH₃ und H₃C-Cl i.Vgl. zu Si-CH₂-Cl) erwarten, dass beispielsweise Polysiloxane mit Methoxymethyl-Resten eine deutlich geringere relative Permittivität aufweisen als diejenigen mit Chlormethylresten.

Die DE 102007055703 A1 beschreibt in Beispiel 3 Polysiloxane, die durch Reaktion eines linearen OH-endständigen Polydimethylsiloxans mit Methoxymethyltrimethoxysilan hergestellt werden. Relative Permittivitätswerte und Durchschlagfestigkeiten von Siloxanen sind nicht erwähnt.

K.A Andrianov et. al: "Synthesis of the USSR Division of Chemical Science", 01.06.1956, Seiten 713 -717 beschreibt die Herstellung von Alkoxymethylalkoxysilanen durch Umsetzung der entsprechenden Chlormethylalkoxysilane mit einem Metallalkoholat in einem Lösungsmittel.

Es war deshalb überraschend und nicht vorhersehbar, dass sich durch Einführung eines polaren Rests in alpha-Position zum Silicium vergleichbar hohe relative Permittivitäten erzielen lassen, wie bei Chlormethylsiloxanen. Diese Polysiloxane sind durch etablierte Standardverfahren der Siliconchemie aus Silanen herstellbar, die neben den entsprechenden methylengebundenen polaren Gruppen hydrolysierbare Reste tragen. Durch Wahl der Stöchiometrie der Einsatzstoffe können Kettenlängen und Mischungsverhältnisse beliebig variiert werden.

Gegenstand der Erfindung ist ein Verfahren zur Herstellung der besonders bevorzugten Ausgangsverbindungen der allgemeinen Formel (5)

**R^{o1}O-CH₂-Si (OAlk) ₍₃₋ₜ₎R^{a}ₜ** (5)

- **R^{o1}**: einen C₁-C₁₈-Kohlenwasserstoffrest bedeutet,
- **R^{a}**: einen C₁-C₁₈-Kohlenwasserstoffrest bedeutet,

**Alk** für einen linearen oder verzweigten Alkylrest mit 1 - 4 Kohlenstoffatomen steht und
t = 0, 1, 2 oder 3 bedeutet, besonders bevorzugt 0 oder 1.

Da man als Nebenreaktion einen Austausch der Si-gebundenen Alkoxygruppen gegen die Alkoholatreste beobachten kann, werden vorzugsweise die Alkoholate eingesetzt, deren Alkylrest R^{o1} dem Alkylrest **Alk** im eingesetzten Chlormethylsilan entspricht.

Das erfindungsgemäße Verfahren zur Herstellung der Verbindungen der allgemeinen Formel (5) erfolgt durch Umsetzung des entsprechenden Chlormethylalkylalkoxysilans der allgemeinen Formel (6)

**Cl-CH₂-Si (OAlk) ₍₃₋ₜ₎R^{a}ₜ** (6)

mit einem Metallalkoholat in Gegenwart eines inerten Lösungsmittels, dessen Siedepunkt mindestens 20°C, besonders bevorzugt mindestens 40°C über dem Siedepunkt der Verbindung der allgemeinen Formel (5) liegt, nach folgender Reaktionsgleichung:

**1/v* (R^{o1}O-)ᵥM^{v+} + Cl-CH₂-Si (OAlk) ₍₃₋ₜ₎R^{a}ₜ ---> R^{o1}O-CH₂-Si (OAlk) ₍₃₋ₜ₎R^{a}ₜ + 1/v*M^{v+}Cl⁻ᵥ**

wobei v für die Anzahl der Ladungen des Metalls M steht und vorzugsweise 1, 2, 3 oder 4 ist und
**M** vorzugsweise für ein Alkali- oder Erdalkalimetall steht, besonders bevorzugt für ein Alkalimetall, insbesondere für Natrium oder Kalium. Bevorzugte Beispiele für Verbindungen der allgemeinen Formel **(R^{o1}O-)ᵥM^{v+}** sind die kommerziell erhältlichen Natriummethanolat, Natriumethanolat, Kaliummethanolat und Kaliumethanolat.

Neben dem zu erwartenden Effekt einer vereinfachten Aufarbeitung der Reaktionsmischung, insbesondere Vermeidung einer Filtration, wurde überraschend gefunden, dass durch Verwendung eines hochsiedenden inerten Lösungsmittels bei der Umsetzung die Ausbeute und Selektivität der Reaktion gegenüber dem Stand der Technik deutlich erhöht werden kann.

Das erfindungsgemäße Verfahren ist dadurch charakterisiert, dass ein Mol-Äquivalent Chlormethylalkoxysilan der allgemeinen Formel (6) mit einem Mol-Äquivalent **R^{o1}O⁻ -** gebunden in einem Metallalkoholat der allgemeinen Formel **(R^{o1}O⁻)ᵥM^{v+} -** in einem inerten hochsiedenden unpolaren Lösungsmittel umgesetzt wird, danach zur Vermeidung von Nebenreaktionen gegebenenfalls vorhandene basische Bestandteile durch Zusatz eines Chlorsilans abgefangen werden und aus der Mischung direkt das Zielprodukt durch fraktionierte Destillation isoliert wird. Das Lösungsmittel gewährleistet dabei eine gute Rührbarkeit der salzhaltigen Reaktionsmischung (Suspension) während der Umsetzung und der Destillation und darüber hinaus die leichte Abtrennung des gebildeten Metallchlorids durch Zugabe von Wasser nach der Destillation und Abtrennung der unteren Salzphase durch einfache Phasentrennung.

Beispiele für C₁-C₁₈-Kohlenwasserstoffreste R^{o1} und **R^{a}** sind Alkylreste wie der Methyl-, Ethyl-, n-Propyl-, iso-Propyl-, n-Butyl-, 2-Butyl-, iso-Butyl-, tert.-Butyl-, n-Pentyl-, isoPentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl-, 4-Ethylcyclohexyl-, Cycloheptylreste, Norbornylreste und Methylcyclohexylreste.

Bevorzugt sind unter den Alkylresten die C₁-C₆-Alkylreste wie der Methyl- und der Ethylrest, insbesondere der Methylrest. Bevorzugt ist **R^{o1}** der Methyl- oder Ethylrest, insbesondere der Methylrest.

Beispiele für **R^{o1}** und **R^{a}** sind auch Alkenylreste, wie der Vinyl-, 2-Propen-2-yl-, Allyl-, 3-Buten-1-yl-, 5-Hexen-1-yl-, 10-Undecen-1-yl, Cycloalkenylreste (2-Cyclohexenyl-, 3-Cyclohexenyl-, Cyclopentadienylrest, 2-(Cyclohex-3-en-1-yl)ethyl, Arylreste, wie der Phenyl-, Biphenylyl-, Naphthylrest; Alkarylreste, wie o-, m-, p-Tolylreste und Phenethylreste (2-Phenylethyl-, 1-Phenylethylrest) und Aralkylreste, wie der Benzylrest.

Unter den Resten R^{o1} sind Alkylreste und Arylreste mit 1 - 6 Kohlenstoffatomen bevorzugt, insbesondere der Methyl-, der Ethyl- und der Phenylrest.

**R^{a}** weisen jeweils vorzugsweise 1 bis 6 Kohlenstoffatome auf. Insbesondere bevorzugt sind Ethyl- Phenyl-, Vinyl- und Methylreste.

Bezogen auf ein Mol-Äquivalent Chlormethylalkoxysilan der allgemeinen Formel (6) werden vorzugsweise mindestens 0,95/v, besonders bevorzugt mindestens 1,0/v Mol-Äquivalente und vorzugsweise höchstens 1,2/v besonders bevorzugt höchstens 1,05/v Mol-Äquivalente Metallalkoholat **(R^{o1}O⁻)ᵥM^{v+}** eingesetzt, insbesondere wird 1,0/v Mol-Äquivalent eingesetzt, da Überschüsse an Alkoholat zu unerwünschten, ausbeutevermindernden Nebenreaktionen führen, beispielsweise die Spaltung der Si-CH₂(Cl)-Bindung und ein Überschuss an Silan der allgemeinen Formel (6) sich nur schwer destillativ abtrennen lässt.

Vorzugsweise wird das Metallalkoholat der allgemeinen Formel **(R^{o1}O⁻)ᵥM^{v+}** als alkoholische Lösung im inerten unpolaren Lösungsmittel vorgelegt. Besonders bevorzugt werden Lösungen des Metallalkoholats im jeweiligen Alkohol **R^{o1}OH** eingesetzt, die 10 bis 40 Gew.-% an Alkoholat enthalten und vorzugsweise kommerziell erhältlich sind.

Als inerte Lösungsmittel kommen alle unpolaren Verbindungen in Frage, deren Löslichkeit in Wasser möglichst gering ist und die mit den Einsatzstoffen und den Produkten keine unerwünschten Reaktionen eingehen. Vorzugsweise liegt die Löslichkeit in Wasser bei 25°C bei maximal 10 Gew.-%, besonders bevorzugt bei maximal 1 Gew.-%, insbesondere bei maximal 0,1 Gew.-%. Vorzugsweise besitzt das Lösungsmittel eine Dichte < 1 g/ml, dies erleichtert die Phasentrennung, da die zumeist verworfene wässrige Phase als untere Phase leicht abgetrennt werden kann. Die obere Phase besteht aus unpolarem inertem Lösungsmittel und kann gegebenenfalls mit Wasser nachgewaschen werden. Restmengen Wasser können aus dem inerten Lösungsmittel durch Destillation gegebenenfalls unter vermindertem Druck leicht wieder entfernt werden, sodass das Lösungsmittel bis auf geringe Verluste zurückgewonnen werden kann und für die nächste Umsetzung - ohne Umfüllvorgänge - wieder im Reaktionsgefäß zur Verfügung steht.

Beispiele für inerte unpolare Lösungsmittel sind Alkane und Isoalkane, sowie Aromaten und Alkylaromaten, die auch teilhydriert sein können. Auch Gemische können zum Einsatz kommen. Die auf 0,10 MPa normierten Siedepunkte liegen vorzugsweise mindestens 20°C, besonders bevorzugt mindestens 40°C über den Siedepunkten der Zielprodukte. Ihre Einsatzmenge liegt vorzugsweise bei mindestens 50, besonders bevorzugt mindestens 80 Gewichtsteilen und vorzugsweise bei höchstens 200, besonders bevorzugt höchstens 150 Gewichtsteilen bezogen auf 100 Gewichtsteile eingesetztes Chlormethylalkoxysilan der allgemeinen Formel (6).

Erfahrungsgemäß lassen sich Nebenreaktionen vermeiden, wenn das Metallalkoholat in Mischung mit dem inerten Lösungsmittel vorgelegt und das Chlormethylalkoxysilan zudosiert wird. Eine Umkehrung der Dosierung oder eine Paralleldosierung der Reaktanden kann aber im Einzelfall Vorteile bieten, z.B. letztere Variante wenn ein kontinuierliches Verfahren angestrebt wird. Die Reaktionstemperatur liegt vorzugsweise bei mindestens 0°C, besonders bevorzugt bei mindestens 20°C, insbesondere bei mindestens 30°C und vorzugsweise höchstens bei 100°C, besonders bevorzugt bei 80°C insbesondere bei 50°C. Sofern das Alkoholat als Lösung im entsprechenden Alkohol eingesetzt wird, destilliert man nach beendeter Umsetzung/Dosierung vorzugsweise bei Normaldruck den überschüssigen Alkohol ab. Die weitgehend alkoholfreie Endreaktionsmischung wird danach mit einem Chlorsilan, vorzugsweise Trimethylchlorsilan oder Dimethyldichlorsilan versetzt, um gegebenenfalls vorliegendes, nicht umgesetztes Alkoholat abzufangen, welches zu Nebenreaktionen führt, die die Ausbeute an Zielprodukt vermindern. Vorzugsweise werden maximal 20 Mol-%, besonders bevorzugt maximal 10 Mol-%, insbesondere maximal 5 Mol-% Chlor bezogen auf Chlormethylalkoxysilan in Form des Chlorsilans zugesetzt.

Anschließend wird das Zielprodukt vorzugsweise durch fraktionierte Destillation gegebenenfalls bei vermindertem Druck isoliert. Das aus dem restlichen Alkoholat und dem zugesetzten Chlorsilan gebildete Alkoxysilan und der nicht reagierte Überschuss des Chlorsilans werden dabei vorzugsweise mit dem Destillatvorlauf abgetrennt. Der Destillationssumpf besteht überwiegend aus dem inerten unpolaren Lösungsmittel, dem Chlorid des Metalls aus dem eingesetzten Metallalkoholat und gegebenenfalls hochsiedenden Nebenprodukten (z.B. Hydrolyse-Produkten) des Zielprodukts der allgemeinen Formel (5). Die Regenerierung des unpolaren Lösungsmittels erfolgt durch Zusatz der zum Lösen des Salzes und der Nebenkomponenten benötigten Menge Wasser, gegebenenfalls unter Erwärmen, und Abtrennung der wässrigen Phase. Sofern gegebenenfalls auftretende unlösliche Bestandteile stören, können diese vor der Destillation mit Wasser ausgewaschen und mit der Wasserphase abgetrennt, oder durch Filtration aus der organischen Phase entfernt werden.

Vorzugsweise wird vor der Destillation nochmals Alkohol R^{o1}-OH zugesetzt, um möglicherweise vorhandene Chlor-Si-Bindungen in Alkoxy-Si-Bindungen zu überführen. Dadurch lassen sich Nebenreaktionen während der Destillation vermeiden. Vorzugsweise werden mindestens 0,5 Moläquivalente, besonders bevorzugt mindestens 1 Moläquivalente Alkohol R^{o1}-OH, bezogen auf eingesetztes Chlorsilan, zugesetzt.

Beispiele für Verbindungen der allgemeinen Formel (5) sind: (CH₃O)₃Si-CH₂OCH₃, (CH₃CH₂O)₃Si-CH₂OCH₃, (CH₃CH₂O)₃Si-CH₂OCH₂CH₃, (CH₃O)₃Si-CH₂OCH₂CH₃, (CH₃O)₂(CH₃CH₂O)Si-CH₂OCH₂CH₃, ([CH₃]₂CHO)₃Si-CH₂OCH₃, ([CH₃]₂CHO)₃Si-CH₂OCH[CH₃]₂, (CH₃)₂CH₃Si-CH₂OCH₃, (CH₃CH₂)₂(CH₃)Si-CH₂OCH₃, (CH₃CH₂O)₂(CH₃)Si-CH₂OCH₂CH₃, ([CH₃]₂CHO)₂(H₃C)Si-CH₂OCH₃, ([CH₃]₂CHO)₂(H₃C)Si-CH₂OCH₂CH₃, (CH₃)₂(H₃CO)Si-CH₂OCH₃, (CH₃CH₂O)(CH₃)₂Si-CH₂OCH₃, (CH₃CH₂O)(CH₃)₂Si-CH₂OCH₂CH₃,

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen und sämtliche Umsetzungen werden bei einem Druck von 0,10 MPa (abs.) durchgeführt.

Die Messung der dielektrischen Eigenschaften erfolgte an einem DIANA-Messgerät (Dielektrischer Analysator) von der Firma Lemke Diagnostics. Die Messzelle war von der Firma Haefely Trench AG: Type 2903. Bedingungen waren jeweils Raumtemperatur, 50Hz und 1000V. Die Messung der Durchschlagspannung wurde in Anlehnung an DIN 57370 bzw. VDE 0370 an einem Dieltest DTA 100 der Firma Baur durchgeführt (Elektrodenabstand 2,5 mm ± 0,02 mm, Angabe = Mittelwertbildung aus 6 Einzelmessungen).

### Herstellungsbeispiel 1: Methoxymethyl-methyldimethoxysilan

In einem mit Stickstoff inertisierten 21-5-Hals-Rundkolben mit Flügelrührer, Tropftrichter, Thermometer und 40cm-Füllkörperkolonne mit Destillationsaufsatz werden 561,6 g Hydroseal^{®} G400H (mit Wasserstoff behandeltes Mitteldestillat Mineralöl von Total, Siedebereich 300 - 370°C) und 672,8 g 30%ige Natriummethanolat-Lösung vorgelegt (3,74 mol). Unter Rühren werden binnen 140 Minuten 590 g (3,74 mol) Chlormethylmethyldimethoxysilan zudosiert. Dabei steigt die Temperatur der Reaktionsmischung auf 36°C an. Binnen 15 Minuten wird auf Rückfluss aufgeheizt (71°C). Bei einem Rücklaufverhältnis von maximal 3 : 1 (Rücklaufmenge : Abnahmemenge) werden bei einer Kopftemperatur von 69°C innerhalb 150 Minuten 522,6 g Methanol abdestilliert. Der Sumpf wird auf 54°C gekühlt und mit 40,5 g (0,37 mol) Trimethylchlorsilan versetzt. Man lässt 10 Minuten bei 55°C rühren und destilliert anschließend fraktionierend im Vakuum über die Füllkörperkolonne. Die Hauptmenge von 361,7 g (98,7 GC-Fl.-%, 64% der Theorie) an Zielprodukt befindet sich in der Fraktion mit einer Kopftemperatur von 95°C und einem Druck von 300 hPa. Die GC-Auswertungen von Vor- und Nachlauf belegen eine Ausbeute von insgesamt 92% der Theorie.

### Herstellungsbeispiel 2: Methoxymethyl--methylpolysiloxan (CH₃)(CH₃OCH₂)SiO_{2/2}:(CH₃)₃SiO_{1/2} = 41 : 2

### a) Hydrolyse von Methoxymethyl-dimethoxymethylsilan (s. Herstellungsbeispiel 1)

In einem mit Stickstoff inertisierten 11-5-Hals-Rundkolben mit Flügelrührer, Thermometer, Kolonnenkopf und Tropftrichter werden 57,6 g (3,2 mol) vollentsalztes Wasser vorgelegt. Über den Tropftrichter werden unter Rühren binnen 75 Minuten 480,6 g (3,2 mol) Methoxymethyl-dimethyoxymethylsilan dosiert. Im Verlauf der Dosierung steigt die Temperatur der Mischung an. Durch Kühlen mit einem Wasserbad wird die Temperatur unter 36°C gehalten. Man lässt bei 25°C 4 Stunden nachreagieren und destilliert anschließend im Vakuum (1 hPa) bei einer Sumpftemperatur von maximal 65°C 201,7 g einer klaren farblosen Flüssigkeit ab. Als Rückstand verbleiben 333,4 g einer farblosen Flüssigkeit, die nach ²⁹Si- und ¹H-NMR-Spektrum folgende Zusammensetzung aufweist (="Hydrolysat a)"): 86 Mol-% eines linearen Polysiloxans der mittleren Formel: [(CH₃OCH₂)(CH₃)SiO]₅₈[CH₃O(CH₃OCH₂)(CH₃)SiO_{1/2}]_{1,6}[HO(CH₃OCH₂)(CH₃)Si O_{1/2}]_{0,4}
14 Mol-% cyclische Siloxane der allgemeinen Formel

[(CH₃OCH₂) (CH₃)SiO]₄₋₇

### b) Äquilibrierung des Hydrolysats aus a) mit Hexamethyldisiloxan

In einem mit Stickstoff inertisierten 500ml-5-Hals-Rundkolben mit Flügelrührer, Thermometer, Kolonnenkopf und Tropftrichter werden bei 25°C 330,3 g (3,17 mol) Hydrolysat a) mit 8,58 g (0,05 mol) Hexamethyldisiloxan (= WACKER CHEMIE AG, AK 0,65) und 380 µl einer 10%igen Lösung von Äquilibrierkatalysator "PNCl2" in Ethylacetat (wie beschrieben in DE4317978, Beispiel 1) versetzt und bei 90°C eine Stunde gerührt. Nach Abkühlen auf 30°C werden zur Deaktivierung des Katalysators 930 µl einer 25%igen wässrigen Ammoniaklösung zugesetzt. Man rührt 15 Minuten bei 30°C und heizt anschließend bei 1 hPa bis 200°C aus, bis kein Destillat mehr übergeht. Der trübe Sumpf wird über eine Druckfilternutsche filtriert (Seitz^{®} K250-Filter). Man isoliert 286,7 g eines klaren, farblosen Polymers, das nach ²⁹Si- und ¹H-NMR-Spektrum folgende mittlere Formel aufweist: [(CH₃OCH₂)(CH₃)SiO]₄₁[CH₃O(CH₃OCH₂)(CH₃)SiO_{1/2}]_{0,7}[(CH₃)₃SiO_{1/2}]_{1,3} dynamische Viskosität: 160,4 mPas (25°C), 85 (50°C), 34,5 (100°C)
Dichte: 1,0638 g/ml (20°C), Brechungsindex: 1,4267,
Wärmeleitfähigkeit: 0,169 W/(m*K) (23°C)
Oberflächenspannung: 26,6 mN/m (20°C)
relative Permittivität εᵣ: 9,6 (50Hz/23°C)
dielektrischer Verlustfaktor: 1,67 (50Hz/23°C)
Durchschlagspannung: 43 kV/mm

## Patentansprüche

1. Verfahren zur Herstellung der Verbindungen der allgemeinen Formel (5)
**R^{o1}O-CH₂-Si(OAlk)₍₃₋ₜ₎R^{a}ₜ** (5)
durch Umsetzung des Chlormethylalkylalkoxysilans der allgemeinen Formel (6)
**Cl-CH₂-Si(OAlk)₍₃₋ₜ₎R^{a}ₜ** (6)
mit einem Metallalkoholat (R^{o1}O⁻)ᵥM^{v+} in Gegenwart eines inerten Lösungsmittels, ausgewählt aus Alkanen und Isoalkanen, sowie Aromaten und Alkylaromaten, die auch teilhydriert sein können, sowie deren Gemischen, dessen Siedepunkt mindestens 20°C über dem Siedepunkt der Verbindung der allgemeinen Formel (5) liegt, wobei
**R^{o1}** einen C₁-C₁₈-Kohlenwasserstoffrest bedeutet,
**R^{a}** einen C₁-C₁₈-Kohlenwasserstoffrest bedeutet,
**Alk** für einen linearen oder verzweigten Alkylrest mit 1 - 4 Kohlenstoffatomen steht,
**t** die Werte 0, 1, 2 oder 3 bedeutet und
**v** für die Anzahl der Ladungen des Metalls **M** steht.

2. Verfahren nach Anspruch 1, bei dem bezogen auf ein Mol-Äquivalent Chlormethylalkoxysilan der allgemeinen Formel (6), 0,95/v bis 1,2/v Mol-Äquivalente Metallalkoholat **(R^{o1}O⁻)ᵥM^{v+}** eingesetzt werden.
